# EUROPÄISCHE PATENTSCHRIFT

(11) **EP 2 298 491 B1**
(45) Veröffentlichungstag und Bekanntmachung des Hinweises auf die Patenterteilung: **28.06.2017**
(21) Anmeldenummer: 10007163.8
(22) Anmeldetag: 12.07.2010
(51) Int. Cl.: B23G 5/00, B23B 51/06, B23P 15/32, B21C 23/14

(54) **Werkzeug mit Kühlmittelkanälen**
Tool with coolant channels
Outil doté de canaux pour fluide de refroidissement

(30) Priorität: 22.09.2009 DE 102009042440
(43) Veröffentlichungstag der Anmeldung: 23.03.2011
(73) Patentinhaber: Firma Gühring oHG, 72458 Albstadt (DE)
(72) Erfinder: Helbig, Armin, 72459 Albstadt - Margrethausen (DE); Schwenck, Manfred, 72458 Albstadt (DE)
(74) Vertreter: Meitinger, Thomas Heinz

(56) Entgegenhaltungen:
- EP-A1- 1 593 442
- EP-A2- 1 502 721
- CH-A5- 665 979
- DE-A1-102006 032 005
- US-A1- 2005 047 951

## Beschreibung

### GEBIET DER ERFINDUNG

Die vorliegende Erfindung betrifft ein Werkzeug mit Kühlkanälen zur spanenden Bearbeitung eines Werkstücks.

### HINTERGRUND DER ERFINDUNG

Es ist Stand der Technik Hartmetallrohlinge durch ein Strangpressverfahren herzustellen, wobei die Rohlinge während des Pressvorganges mit Innenbohrungen versehen werden. Die Innenbohrungen dienen dabei als Kanäle, um Kühlmittel und/oder Schmiermittel zum schneidenden Teil des Werkzeugs zu fördern. Die Innenbohrungen eines Rohlings können dabei wendelförmig ausgeführt sein, wobei die Innenbohrungen und die ebenfalls wendelförmig ausgebildeten Spannuten des fertigen Werkzeuges zueinander passend ausgebildet sein müssen. Das Dokument EP 1593442 A1 beschreibt ein Verfahren und eine Vorrichtung zur Herstellung eines Bohrrohlings oder eines Fräserrohlings. Das Dokument US 20050047951 A1 offenbart ein Verfahren zur Herstellung eines Rohlings. Die DE 102006032005 A1 beschreibt ein Werkzeug mit sich veränderndem Nutdrallwinkel.

### ZUSAMMENFASSUNG DER ERFINDUNG

Die wendelförmig ausgebildeten Innenbohrungen führen zu einem höheren Strömungswiderstand für das in den Innenbohrungen zu fördernde Kühlmittel und/oder Schmiermittel. Aus diesem Grund fällt die Menge an Kühlmittel und/oder Schmiermittel, die pro Zeit dem schneidenden Bereich des spanenden Werkzeugs zugeführt werden kann, im Vergleich zu geradlinig geführten Innenbohrungen geringer aus. Dies hat kürzere Standzeiten und/oder langsamere Schneidgeschwindigkeiten wegen schlechterer Kühlung bzw. schlechterer Abfuhr der Späne zur Folge.

Es kann daher als eine Aufgabe der vorliegenden Erfindung betrachtet werden, Werkzeuge mit Innenbohrungen zur Verfügung zu stellen, die längere Standzeiten bzw. höhere Schneidgeschwindigkeiten des spanenden Werkzeugs ermöglichen.

Diese Aufgabe wird im unabhängigen Anspruch gelöst. Weitere vorteilhafte Ausgestaltungen der Erfindung ergeben sich aus dem abhängigen Anspruch. Gemäß der Erfindung wird ein Werkzeug zur spanenden Bearbeitung eines Werkstücks angegeben, wobei das Werkzeug eine Spannut und einen Einspannschaft aufweist, wobei das Werkzeug einen ersten Bereich mit einem ersten Spiralwinkel der Spannut aufweist und einen zweiten Bereich mit einem zweiten Spiralwinkel der Spannut aufweist, wobei der erste Spiralwinkel unterschiedlich zum zweiten Spiralwinkel ausgebildet ist und/oder wobei zwischen dem ersten Bereich und dem zweiten Bereich ein dritter Bereich angeordnet ist, wobei im dritten Bereich der Spiralwinkel der Spannut im Grenzbereich zum ersten Bereich gleich zum ersten Spiralwinkel ist und im Grenzbereich zum zweiten Bereich gleich zum zweiten Spiralwinkel ist, wobei der erste Bereich sich über einen halben, einen ganzen, einen eineinhalbfachen oder einen zweifachen Durchmesser des Werkzeugs erstreckt, wobei der dritte Bereich sich über einen halben, einen ganzen, einen eineinhalbfachen, einen zweifachen, einen zweieinhalbfachen, einen dreifachen, einen dreieinhalbfachen, einen vierfachen oder einen viereinhalbfachen Durchmesser des Werkzeugs erstreckt und wobei der zweite Bereich das restliche Werkzeug einnimmt, wobei das Werkzeug einen Kühlmittelkanal aufweist, wobei der Kühlmittelkanal über die gesamte Länge des Werkzeugs einen konstanten Drallwinkel aufweist oder wobei der Kühlmittelkanal über die gesamte Länge außer im Bereich des Einspannschaftes einen konstanten Drallwinkel aufweist.

Der Rohling, auch als Grünling bezeichnet, entsteht durch einen Strangpressvorgang. Hierbei wird der Rohling während des Pressvorgangs mit Innenbohrungen, auch als Kühlkanäle, Innenkanäle oder einfach Kanäle bezeichnet, versehen. Diese Innenbohrungen verlaufen in einem ersten Bereich geradlinig und parallel zur Längsachse des Rohlings. Im Wesentlichen geradlinig und parallel zur Längsachse des Rohlings bedeutet hier, dass aufgrund von Herstelltoleranzen die Innenbohrungen auch teilweise nicht geradlinig und/oder nicht parallel zur Längsachse des Rohlings verlaufen können. In einem weiteren Abschnitt, bzw. Bereich des Rohlings weisen die Innenbohrungen einen Drall auf. Insgesamt liegt also ein Rohling vor, der in einem Abschnitt eine (oder mehrere) geradlinige Innenbohrung(en) aufweist und wobei ferner dieselbe Innenbohrung (dieselben Innenbohrungen) in einem weiteren Abschnitt wendelförmig bzw. schraubenförmig ausgebildet ist (sind). Der Abschnitt mit der geradlinig geführten Innenbohrung kann als Schaft für das spanende Werkzeug genutzt werden, wohingegen der Abschnitt mit der wendelförmig ausgebildeten Innenbohrung sich als schneidender Teil des Werkzeugs eignet. Hierdurch kann der gesamte Bereich in dem eine wendelförmige Ausbildung der Innenbohrung vorliegt, verringert werden, wodurch der Strömungswiderstand für das in der Innenbohrung geführte Fluid verringert wird. Als Ergebnis hieraus folgt eine höhere Menge des in der Innenbohrung förderbaren Fluids, woraus sich eine längere Standzeit und/oder höhere Schnittgeschwindigkeit des spanenden Werkzeugs ergibt. Der erste Drallwinkel kann z.B. einen Wert im Bereich von 10 bis 60 Grad aufweisen.

Die Strangpressvorrichtung dient zum Auspressen eines Rohlings, wobei der Rohling während des Auspressens mit Innenbohrungen versehen wird. Ziel bei der Herstellung von Rohlingen ist es, Rohlinge mit reproduzierbar gleichen Geometrien der Innenbohrungen herzustellen. Ferner sollte der Abschnitt des Rohlings mit wendelförmig ausgebildeter Innenbohrung möglichst kurz sein, um den Strömungswiderstand möglichst gering zu halten. Andererseits darf der Abschnitt mit der geradlinig geführten Innenbohrung nicht in den arbeitenden, schneidenden Teil des Werkzeugs ragen, da ansonsten die Gefahr besteht, dass die Innenbohrung unterbrochen wird oder dass die Wände des schneidende Teils des Werkzeugs zu dünn ausfallen, was die Standzeiten drastisch verkürzen kann. Es ist daher eine exakte Steuerung erforderlich, um zu gewährleisten, dass geradlinig ausgeführte Innenbohrungen nur im Bereich des Schaftes vorliegen. Dies wird durch das erfindungsgemäße Steuerungselement sichergestellt.

In einer weiteren erfindungsgemäßen Ausführungsform wird ein Werkzeug zur Verfügung gestellt, wobei der erste Spiralwinkel eine Gradzahl zwischen 5° und 50°, insbesondere 30°, aufweist und/oder wobei der zweite Spiralwinkel eine Gradzahl zwischen 5° und 50°, insbesondere 15°, aufweist.

Gemäß dem Verfahren werden zwei Abschnitte innerhalb eines Rohlings ausgeformt. Diese beiden Abschnitte unterscheiden sich durch die unterschiedliche Ausbildung der Innenbohrung. In einem ersten Abschnitt verläuft die Innenbohrung im Wesentlichen geradlinig. In einem weiteren, zweiten Abschnitt erfährt dieselbe Innenbohrung einen Drall mit einem Drallwinkel. Der Drallwinkel ist größer als Null und kann z.B. einen Wert aus dem Bereich von 10 Grad bis 60 Grad aufweisen.

Gemäß eines nicht erfindungsgemäßen Beispiels wird ein Rohling zur Verfügung gestellt, wobei der Rohling ein homogenes Gefüge aufweist, d.h. dass der Rohling wie "aus einem Guß" ist. Der Rohling weist trotz einer abschnittsweise unterschiedlichen inneren Struktur der mindestens einen Innenbohrung keine Brüche oder Stoßstellen oder zusammengefügte Stellen auf. Hierdurch wird eine gleichmäßig hohe Belastbarkeit über die gesamte Länge des Rohlings gewährleistet, was die Standzeit erhöht. Diskontinuitäten, Stoßstellen oder Kanten an der Wandung der Innenbohrung werden völlig vermieden oder zumindest reduziert. Ohne die genannten Diskontinuitäten werden insbesondere bei Öl/Luft-Gemischen auftretende unerwünschte Wirbel an diesen Stellen vermieden. Dadurch lässt sich insbesondere die Fließgeschwindigkeit von Öl/Luft-Gemischen, die durch die Innenbohrung geleitet werden, erhöhen.

Gemäß einem weiteren nicht erfindungsgemäßen Beispiels wird ein Rohling zur Verfügung gestellt, wobei die Innenbohrung zur Leitung von Kühlmitteln und/oder Schmiermitteln geeignet ist. Das Kühlmittel bzw. das Schmiermittel kann z.B. Bohrwasser und/oder ein Öl/Luft-Gemisch und/oder ein Kühlschmierstoff und/oder ein sonstiges geeignetes Mittel zur Kühlung und/oder zur Schmierung des Werkzeugs sein.

Das Steuerungselement weist ein Mittel zur Feststellung der aktuell gepressten Position des Rohlings auf und kann durch Vergleich mit einer vorgegebenen Soll-Geometrie der Innenbohrung feststellen, welche Ausformung die Innenbohrung weiterhin erfahren muss.

Mit einer Einwirkungsmöglichkeit auf die Strangpressvorrichtung kann das Steuerungselement daraufhin sicherstellen, dass die vorgegebene Soll-Geometrie der Innenbohrung weiterhin maßhaltig erstellt wird.

Als ein Gegenstand der Erfindung kann angesehen werden, einen Rohling mit vermindertem Strömungswiderstand innerhalb der Innenbohrung durch eine soweit als möglich geradlinig geführte Innenbohrung zur Verfügung zu stellen, wobei die Innenbohrung zumindest im ersten Abschnitt, d.h. üblicherweise im später als Schaft genutzten Bereich, weitgehend geradlinig ausgebildet ist.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

Diese und andere Aspekte der vorliegenden Erfindung werden durch die Bezugnahme auf die hiernach beschriebenen beispielhaften Ausführungsformen erläutert und verdeutlicht.

### KURZE BESCHREIBUNG DER ZEICHNUNGEN

Nicht erfindungsgemäße Beispiele sowie erfindungsgemäße Ausführungsformen werden im Folgenden mit Bezugnahme auf die folgenden Zeichnungen beschrieben. Es zeigen
Fig. 1 einen Rohling mit zwei Innenbohrungen im Längsschnitt,
Fig. 2 einen Rohling mit zwei Innenbohrungen im Querschnitt,
Fig. 3 einen Rohling mit zwei Innenbohrungen im Längsschnitt,
Fig. 4 einen Rohling und eine Strangpressvorrichtung,
Fig. 5 einen Rohling, eine Strangpressvorrichtung und eine Steuerung,
Fig. 6 ein Werkzeug mit Kühlkanälen,
Fig. 7 ein weiteres Werkzeug mit Kühlkanälen,
Fig. 8 ein erfindungsgemäßes Werkzeug,
Fig. 9 eine Stirnseite eines erfindungsgemäßen Werkzeugs,
Fig. 10 ein Rohling zur Herstellung eines erfindungsgemäßen Werkzeugs.

### DETAILLIERTE BESCHREIBUNG BEISPIELHAFTR AUSFÜHRUNGSFORMEN

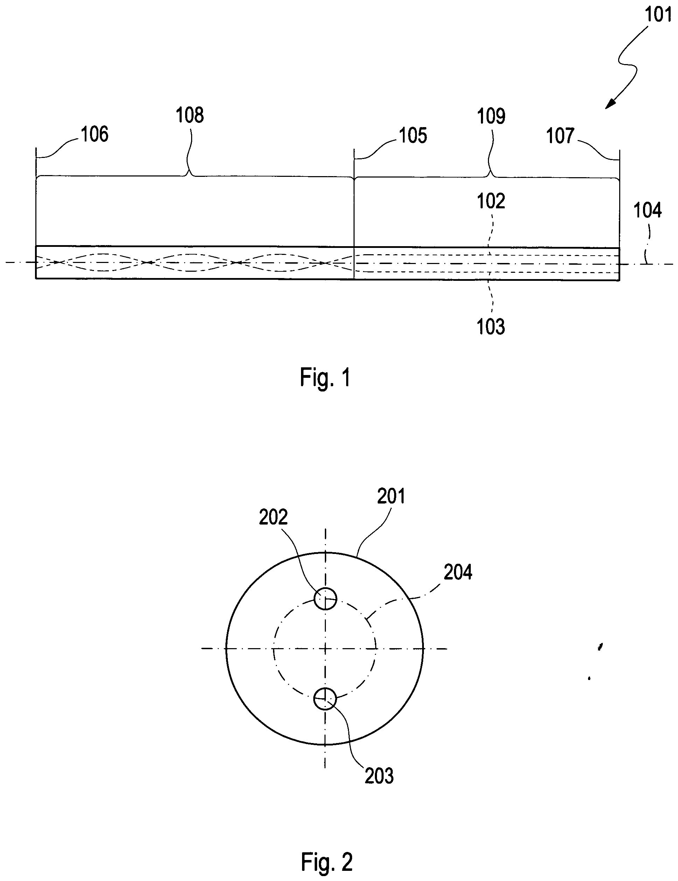

Fig. 1 zeigt einen Rohling 101, auch als Grünling bezeichnet, im Längsschnitt, wobei die Innenbohrungen 102, 103 des Rohlings 101 schematisch dargestellt sind. In einem ersten Abschnitt 109, der von einer Trennungslinie 105 bis zu einer Trennungslinie 107 reicht, sind die Innenbohrungen 102, 103 geradlinig ausgeführt. Die Innenbohrungen 102, 103 verlaufen in diesem Abschnitt 109 parallel zur Längsachse 104 des Rohlings 101. Die Innenbohrungen 102, 103, die auch als Kühlkanäle oder einfach Kanäle bezeichnet werden können, verlaufen innerhalb des Rohlings 101 und befördern Fluide vom Schaft zum schneidenden, arbeitenden Teil des fertigen Bohrers, der aus dem Rohling 101 hergestellt wird. Der Abschnitt 109 stellt beim fertig gestellten spanenden Werkzeug, z.B. einem Bohrwerkzeug oder Fräser (z.B. Gewindefräser), den Schaft dar. An diesem Schaft kann das Spannfutter, Bohrfutter, den Bohrer aufnehmen. Um die Trennungslinie 105 herum ist ein Übergangsbereich innerhalb des Rohlings 101. In diesem Abschnitt beginnt die Ineinanderverdrillung der im ersten Abschnitt 109 geradlinig und parallel zur Längsachse geführten Innenbohrungen 102, 103. Dieser Übergangsbereich kann theoretisch als Fläche nahezu ohne Breite ausgebildet sein oder als ein dritter Abschnitt in dem sich die Innenbohrungen 102, 103 allmählich ineinander verdrillen, wobei angrenzend zum Abschnitt 109 kein Drall vorhanden ist und in Richtung zum Abschnitt 108, der Drall einen zunehmenden Drallwinkel aufweist bis der Drallwinkel einen Wert aufweist, der dem Wert des Drallwinkels des Dralls der Innenbohrungen 102, 103 im Abschnitt 108 entspricht. Im Übergangsbereich kann auch über eine bestimmte Länge entlang der Längsachse des Rohlings 101 die Innenbohrungen 102, 103 einen konstanten Drallwinkel oder auch in Richtung zum Abschnitt 108 sogar einen zunächst abnehmenden Drallwinkel aufweisen. Der Abschnitt 108 beginnt an der Trennlinie 106 und kann an der Trennlinie 105 enden, es sei denn der dritte Abschnitt erstreckt sich in den zweiten Abschnitt 108. In diesem Fall ergibt sich im Rohling 101 neben dem ersten und dem zweiten Abschnitt ein dritter Abschnitt. Der Rohling 101 weist zwei Innenbohrungen 102, 103 auf. Der Rohling 101 könnte jedoch auch nur eine Innenbohrung 102, 103 oder drei, vier oder mehr Innenbohrungen 102, 103 aufweisen. Die Bemaßung stellt nur ein Beispiel für eine konkrete Ausführungsform dar, wobei hier die Innenbohrungen 102, 103 im zweiten Abschnitt 108 einen Drall mit einem Drallwinkel von jeweils 30 Grad aufweisen. Der Drallwinkel könnte jedoch auch 15 Grad, 20 Grad, 30 Grad, 40 Grad oder einen sonstigen Gradwert im Bereich von 5 Grad bis 80 Grad, insbesondere 10 Grad bis 45 Grad sein. Der Drallwinkel der Innenbohrungen 102, 103 kann auch voneinander abweichen.

Fig. 2 zeigt den Rohling 101 im Querschnitt. Der Kreis 201 stellt die Außengrenze des Rohlings dar. Auf dem Kreis 204 befinden sich die zwei Innenbohrungen 202, 203. Die Maßangaben der Fig. 2 stellen nur eine mögliche Ausführungsform des Rohlings dar. Der Rohling ist in Fig. 2 um das fünffache vergrößert dargestellt (5:1).

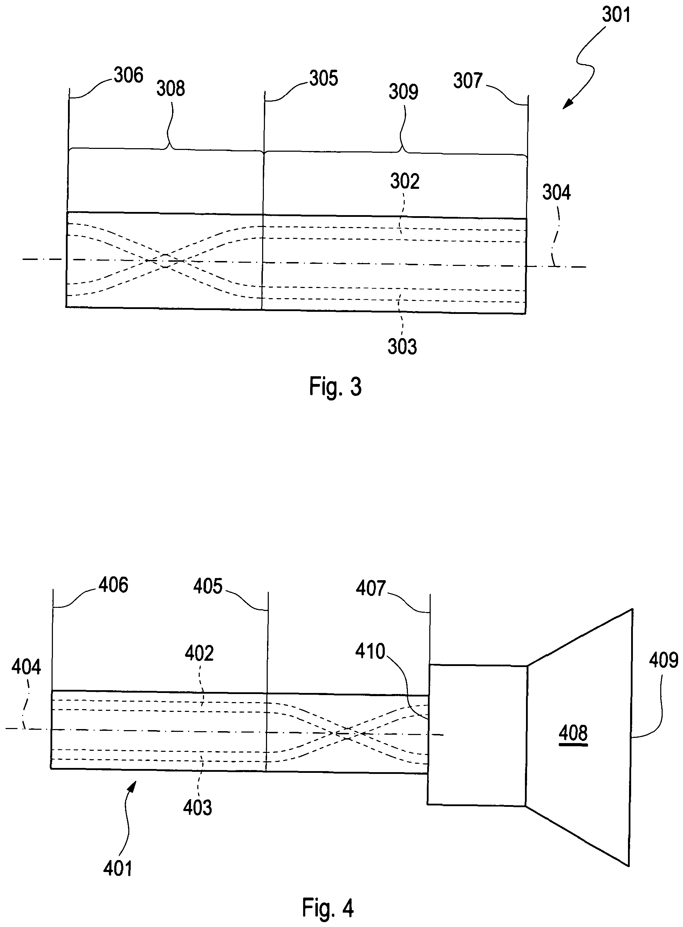

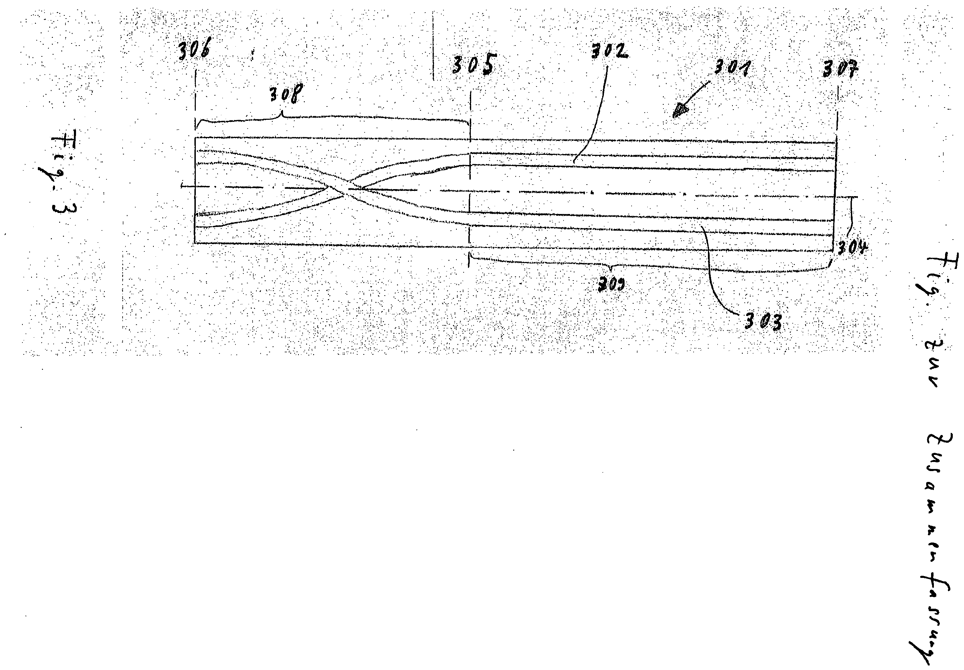

Fig. 3 zeigt einen Rohling 301 mit einem ersten Abschnitt 309 und einem zweiten Abschnitt 308. Der erste Abschnitt 309 reicht von einem Ende 307 des Rohlings 301 bis zur Trennlinie 305. Dieser erste Abschnitt 309 stellt beim fertigen, spanenden Werkzeug, z.B. ein Bohrer oder Fräser, den Schaft dar. Der zweite Abschnitt 308 reicht von dem anderen Ende 306 des Rohlings 301 bis zur Trennlinie 305. Die Innenbohrungen 302, 303 verlaufen im ersten Abschnitt geradlinig und parallel zur Längsachse 304 des Rohlings 301. Im zweiten Abschnitt 308, der von der Trennlinie 306, die das Ende des Rohlings darstellt, bis zur Trennlinie 305 reichen kann, verlaufen die Innenbohrungen 302, 303 nicht mehr geradlinig und parallel zur Längsachse 304 des Rohlings 301. Im zweiten Abschnitt sind die Innenbohrungen ineinander verdrillt, d.h. die Innenbohrungen sind schraubenförmig bzw. wendelförmig ausgebildet. Diese wendelförmige Ausformung der Innenbohrungen 302, 303 ist notwendig, um den Spannuten des fertigen Werkzeugs ausweichen zu können, damit die Innenbohrungen nicht entlang der Längsachse 304 unterbrochen werden bzw. der Außenwand des Werkzeugs zu nahe kommen. Die Innenbohrungen dienen dazu Kühlmittel, Schmiermittel, Bohrwasser, Kühlschmierstoff und/oder ein Luft/Öl-Gemisch zum vorderen Teil des spanenden Werkzeugs zu führen. Bei einem Bohrer kann durch die Innenbohrungen 302, 303 die Bohrerspitze mit Kühlmittel versorgt werden. Das aus den Innenbohrungen tretende Kühlmittel wird über die Spannuten zusammen mit den anfallenden Spänen aus dem Bohrloch herausgeführt. Die Innenbohrungen können außer Kühlmittel bzw. Schmiermittel auch ein Luft/Öl-Gemisch (bzw. Öl/Luft-Gemisch) zum vorderen schneidenden Teil des spanenden Werkzeugs fördern, wodurch eine Minimalmengenschmierung ermöglicht wird. Es ist insbesondere vorteilhaft den ersten Abschnitt mit geradlinigen Innenbohrungen 302, 303 zu versehen, da hierdurch der Strömungswiderstand des geförderten Fluids (Kühlmittel, Schmiermittel, Luft/Öl-Gemisch, Kühlschmierstoff, Bohrwasser) verringert werden kann. Hierdurch ergibt sich für den gesamten Rohling einen niedrigeren Strömungswiderstand, wodurch eine höhere Fließgeschwindigkeit des Fluids innerhalb des fertig erstellten spanenden Werkzeugs erzielt werden kann. Hierdurch wird eine bessere, da höhere, Kühlung bzw. schnellere Abfuhr der Späne über die Spannuten erreicht, wodurch die Standzeiten erhöht werden und/oder die Arbeitsgeschwindigkeit des spanenden Werkzeugs, aufgrund der Erhöhung der Rotationsgeschwindigkeit des Werkzeugs, erhöht werden kann.

Fig. 4 zeigt einen Rohling 401 im Längsschnitt mit zwei Innenbohrungen 402, 403, wobei in einem ersten Abschnitt, der von der Trennlinie 406 bis zur Trennlinie 405 reicht, die Innenbohrungen 402, 403 geradlinig und parallel zur Längsachse 404 ausgebildet sind. In einem zweiten Abschnitt, der von der Trennlinie 405 bis zur Trennlinie 407 reicht, weisen die Innenbohrungen 402, 403 einen Drall mit einem Drallwinkel größer Null auf. Hierbei kann an der Trennlinie 405 der Drall zunächst mit einem kleineren Drallwinkel beginnen und hineinreichend in den zweiten Abschnitt einen Drall mit wachsendem Drallwinkel aufweisen. Der zweite Abschnitt kann dabei einen Unterabschnitt aufweisen, der von dem Ende 407 des Rohlings 401 bis vor die Trennlinie 405 reicht und einen ungefähr konstanten Drallwinkel der Innenbohrungen 402, 403 aufweist. Der Bereich des zweiten Abschnitts, der eine Innenbohrung 402, 403 mit sich ändernden Drallwinkel aufweist, kann als dritten Abschnitt neben dem ersten und dem zweiten Abschnitt bezeichnet werden. Der Rohling 401 entsteht durch die Verarbeitung einer Strangmasse mit Hilfe einer Strangpressvorrichtung 408. Die Strangpressvorrichtung 408 weist einen Einlass 409 auf, der die Rohstrangmasse aufnimmt, und einen Auslass 410, aus dem der Rohling gepresst, und zwar stranggepresst, wird. Die Strangpressvorrichtung 408 umfasst Elemente zur Ausbildung von Innenbohrungen 402, 403 des Rohlings 401, wobei die Strangpressvorrichtung 408 in der Lage ist, die Innenbohrungen 402, 403 entlang der Längsachse 404 des Rohlings mit unterschiedlichen Drallen, d.h. mit Drallen mit unterschiedlichen Drallwinkeln, zu versehen. Hierdurch können Rohlinge 401 entstehen, deren Innenbohrung 402, 403 einen Drall aufweist, dessen Drallwinkel sich kontinuierlich ändert oder dessen Drallwinkel über einzelne Bereich konstant ist oder deren Drallwinkel in anderen Bereichen einen Wert ungefähr Null aufweist.

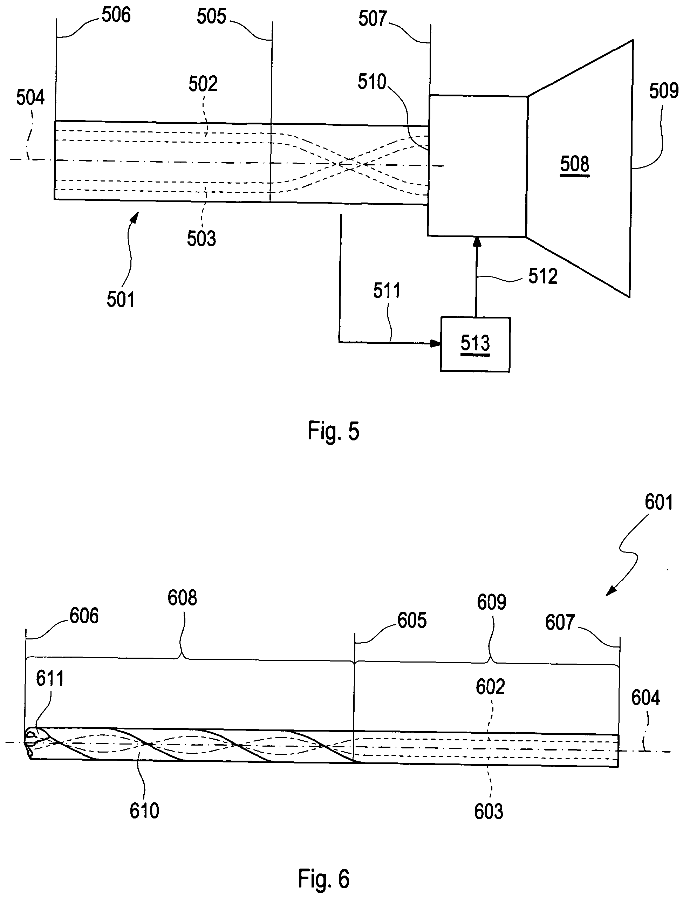

Fig. 5 zeigt einen Rohling 501 mit einem ersten Abschnitt, der von der Trennlinie 506 bis zur Trennlinie 505 reicht, wobei in diesem Abschnitt die Innenbohrungen 502, 503 geradlinig und außerdem parallel zur Längsachse 504 des Rohlings 501 verlaufen. Es ist auch vorstellbar, dass die Innenbohrungen 502, 503 nicht parallel zur Längsachse 504 des Rohlings 501 aber geradlinig verlaufen. Es ist auch denkbar, dass die Innenbohrungen 502, 503 weder parallel zur Längsachse 504 noch geradlinig verlaufen, aber auch nicht wendelförmig ausgebildet sind. Um die Trennlinie 505 kann ein Übergangsbereich sein, in welchem die Innenbohrungen 502, 503 in die gedrallten Innenbohrungen 502, 503 des zweiten Abschnitts übergehen. Dieser Übergangsbereich kann als dritter Abschnitt betrachtet werden. Es ist auch vorstellbar, dass kein Übergangsbereich vorhanden ist. In diesem Fall gehen die geradlinigen Innenbohrungen 502, 503 des ersten Abschnitts unmittelbar in die gedrallten Innenbohrungen 502, 503 des zweiten Abschnitts über, ohne dass eine allmähliche Drallanpassung erfolgt. Der zweite Abschnitt reicht in diesem Fall von der Trennlinie 505 bis zur Trennlinie 507. Der Rohling 501 wird durch Strangpressen mittels einer Strangpressvorrichtung 508 hergestellt. Hierbei wird in die Strangpressvorrichtung eine Rohmasse in den Einlass 509 eingeführt und der Rohling wird aus dem Auslass 510 ausgepresst. Die Steuerung des Dralls, also an welcher Position entlang der Längsachse 504 des Rohlings 501 der Drall der Innenbohrung 502, 503 welchen Drallwinkel aufweisen soll, erfolgt durch ein Steuerungselement 513. Das Steuerungselement 513 steuert über einen Steuerpfad 512 die Strangpressvorrichtung 508 an und erhält Informationen über die aktuelle Längsposition, also die Position des Rohlings 501 entlang seiner Längsachse 504, über einen Signalpfad 511. Durch diesen Regelkreis können reproduzierbar Rohlinge 501 mit gleicher Drallverteilung der Innenbohrungen 502, 503 über deren Längsachse 504 hergestellt werden.

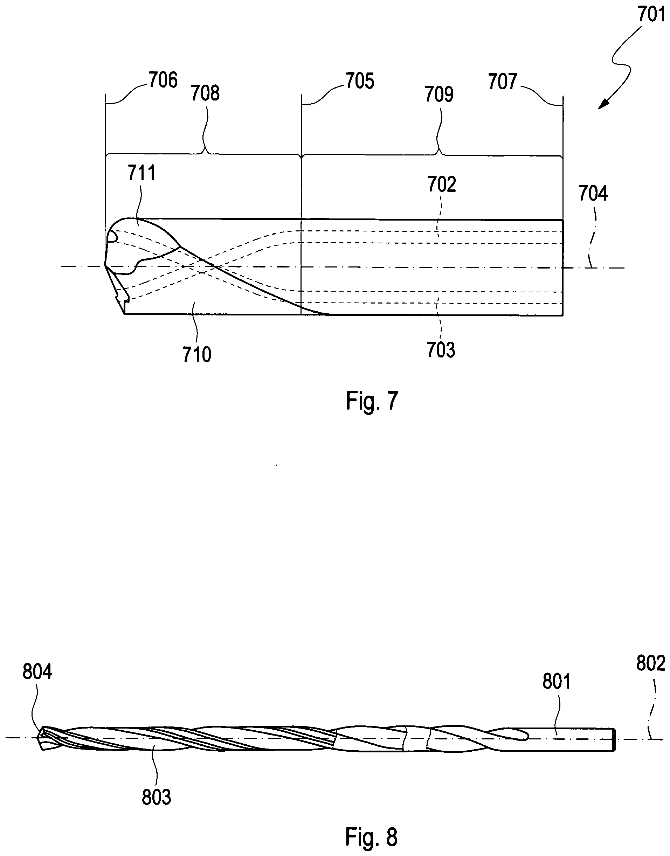

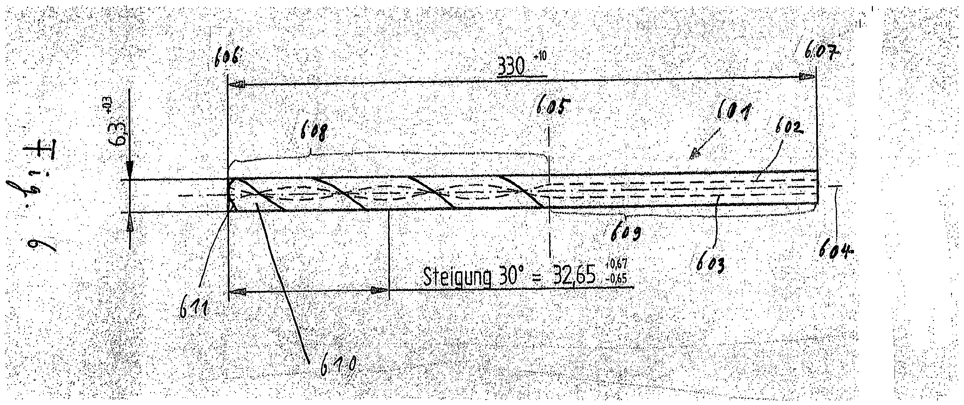

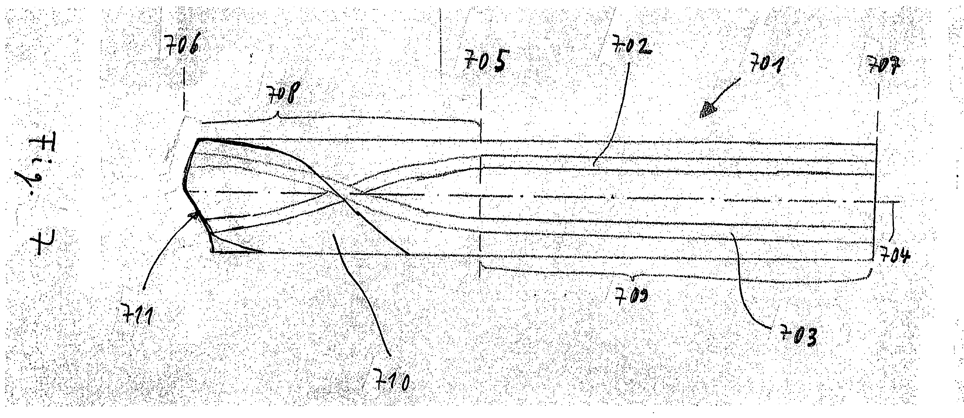

Fig. 6 zeigt ein Werkzeug 601, z.B. einen Bohrer, mit zwei Innenbohrungen (Kühlkanälen) 602, 603, wobei das Werkzeug eine Schneide 611 und mindestens eine Spannut 610 aufweist. Die Spannut 610 kann vor dem ersten Abschnitt, dem Schaft, 609 bzw. im vorderen Bereich des Schaftes 609 enden, damit die geförderten Späne vor dem in einem Werkzeugfutter eingespannten Bereich des Schaftes 609 ausgeworfen werden können. Fig. 7 zeigt ein Werkzeug 701, z.B. einen Bohrer, mit einer Schneide 711 und einer Spannut 710.

Der Vorteil ist auch darin zu sehen, dass Rohlinge mit Innenbohrungen hergestellt werden können, die jeweils einen Drall mit unterschiedlichen Drallwinkeln aufweisen können und zwar auf eine einfache Art und Weise durch Strangpressen. Es muss insbesondere der Fertigungsvorgang nicht unterbrochen werden, um z.B. Teilstücke mit unterschiedlichen Drallwinkeln zusammenzusetzen. Hierdurch ergibt sich eine höhere Produktivität. Ferner wird die Verwendung von Lot zur Herbeiführung einer Lot- oder Lötverbindung vermieden, wodurch ein zusätzlicher Arbeitsvorgang entfallen kann, was zur Beschleunigung des Fertigungsvorgangs führt, bzw. es entfällt ein notwendiger Schweißvorgang.

Die Herstellung eines spanenden Werkzeugs, z.B. Bohrer, Fräser, insbesondere Gewindefräser, erfordert wendelförmige Innenbohrungen, da die Innenbohrungen nicht mit den Spannuten kollidieren dürfen. Ansonsten würden die Innenbohrungen unterbrochen werden und die zu fördernden Fluide, insbesondere Kühlmittel, Schmiermittel, Öl und/oder Luft, würden nicht zu den insbesondere schneidenden Bereichen des spanenden Werkzeugs gelangen. Die wendelförmige Ausbildung der Innenbohrungen ist auch nötig, damit die Außenwände im schneidenden Teil des Werkzeugs nicht zu dünn werden, wodurch sich die Standzeit dramatisch verringern würde. Nachteilig ist jedoch, dass wegen der wendelförmigen Ausbildung der Innenbohrungen der Strömungswiderstand erhöht wird. Vorteilhafterweise weist die Erfindung im Schaft geradlinig geführte Innenbohrungen auf, wodurch der Strömungswiderstand deutlich geringer ausfällt als bei Innenbohrungen, die über die gesamte Länge des spanenden Werkzeugs, also auch im Schaftbereich, eine wendelförmige Ausbildung der Innenbohrungen aufweisen. Das Verfahren ermöglicht hierbei die Herstellung der strömungstechnisch vorteilhaften Rohlinge aus einem Stück, ohne dass mehrere Teile zusammengesetzt werden müssen, z.B. Teile mit wendelförmigen Innenbohrungen und Teile mit geradlinigen Innenbohrungen. Hierdurch wird eine kürzere Fertigungszeit der Rohlinge ermöglicht. Außerdem weisen hierdurch die Rohlinge ein homogenes Gefüge auf, was zu einer höheren Belastbarkeit der hergestellten spanenden Werkzeuge führt, wodurch eine längere Standzeit und/oder höhere Verfahrgeschwindigkeit erreicht werden kann.

Aufgrund der Herstellung der Rohlinge "aus einem Guss" entfällt die Notwendigkeit der fluchtenden Anpassung der Innenbohrungen von zusammen zu setzenden Teilen. Hierdurch wird daher ein zeit- und arbeitsaufwendiger Fertigungsprozess vermieden.

Aufgrund des Steuerungselements können reproduzierbar Rohlinge mit gleichen Geometrien der Innenbohrungen hergestellt werden. Hierdurch wird die Ausschussrate verringert.

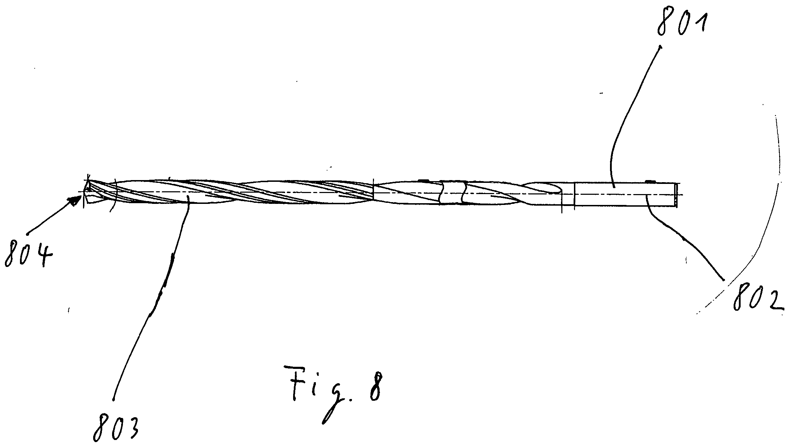

Fig. 8 zeigt ein erfindungsgemäßes Werkzeug mit einem ersten Abschnitt bzw. Bereich mit einem ersten Spiralwinkel bzw. Spiralsteigungsverlauf eines oder mehrerer Spannuten 803, wobei im ersten Bereich der Spiralwinkel konstant ausgebildet sein kann. Das Werkzeug weist einen dritten Abschnitt mit einem sich ändernden Spiralwinkel und einen zweiten Abschnitt mit einem zweiten Spiralwinkel der Spannut bzw. der Spannuten auf, wobei der zweite Spiralwinkel konstant über die Länge des zweiten Abschnitts ausgebildet sein kann. In einer beispielhaften Ausführungsform der Erfindung kann der erste Spiralwinkel eine Gradzahl zwischen 5° und 50°, insbesondere 30°, betragen, der Spiralwinkel im dritten Abschnitt kontinuierlich abnehmen, insbesondere von 30° auf 15°, und der zweite Spiralwinkel einen konstanten Betrag im Bereich zwischen 5° und 50°, insbesondere 15°, betragen. Erfindungsgemäß erstreckt sich der erste Abschnitt über eine Länge von der Hälfte, einem ganzen, einem eineinhalbfachen, einem doppelten, einem zweieinhalbfachen, einem dreifachen, einem dreieinhalbfachen, einem vierfachen oder einem viereinhalbfachen des Durchmessers des Werkzeugs der dritte Abschnitt über eine Länge von einem halben, einem ganzen, einem eineinhalbfachen, einem zweifachen, einem zweieinhalbfachen, einem dreifachen, einem dreieinhalbfachen, einem vierfachen oder einem viereinhalbfachen des Durchmessers des Werkzeugs erstrecken und der zweite Abschnitt nimmt den restlichen Bereich des Werkzeugs ein. Erfindungsgemäß weist das Werkzeug einen oder mehrere Kühlmittelkanäle auf, wobei diese Kühlmittelkanäle einen konstanten Drallwinkel über die gesamte Länge des Werkzeugs aufweisen können. In einer weiteren alternativen Ausführungsform kann das Werkzeug einen oder mehrere Kühlmittelkanäle aufweisen, die im Bereich des Einspannschaftes 801 einen konstanten Drallwinkel, z.B. 0°, aufweisen, und im übrigen Bereich des Werkzeugs einen anderen konstanten Drallwinkel, z.B. 15°, aufweisen. In einem nicht erfindungsgemäßen Beispiel kann das Werkzeug nur einen ersten Abschnitt und einen zweiten Abschnitt und keinen dritten Abschnitt aufweisen. Bei dieser Variante weist das Werkzeug daher einen abrupten Übergang, also keinen allmählicher Übergang, des ersten Spiralwinkels zum zweiten Spiralwinkel auf.

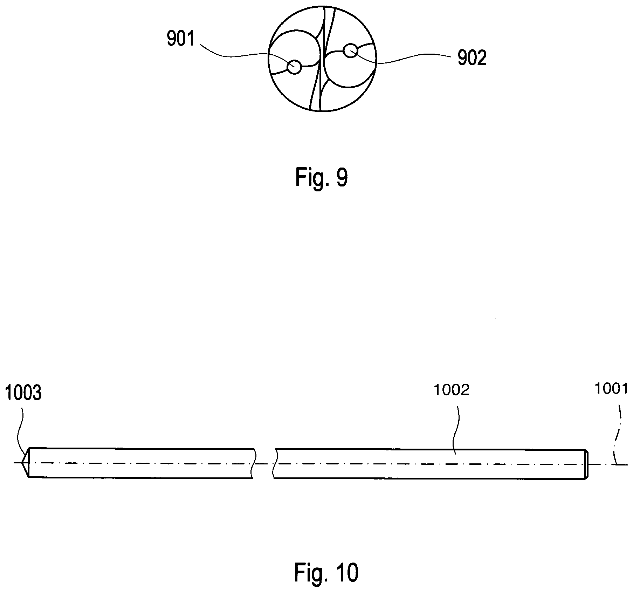

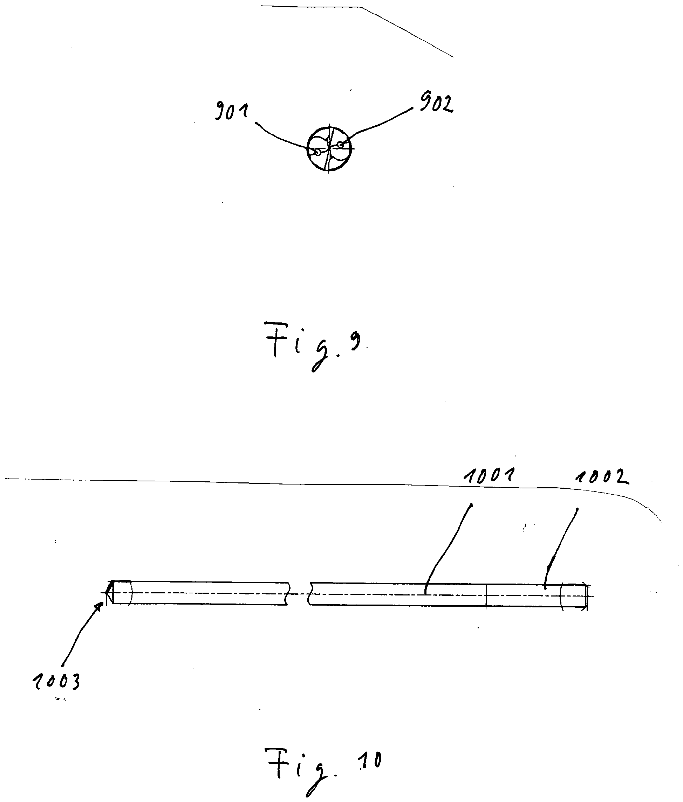

Fig. 9 zeigt eine Stirnseite eines erfindungsgemäßen Werkzeugs mit zwei Austrittsöffnungen 901, 902 zweier Kühlmittelkanälen. Alternativ kann das erfindungsgemäße Werkzeug nur einen Kühlmittelkanal oder beliebig viele aufweisen.

Fig. 10 zeigt einen Rohling zur Herstellung eines erfindungsgemäßen Werkzeugs mit einem Bereich 1002, der als Einspannschaft vorgesehen sein kann, und einer Spitze 1003, die zu einer Werkzeugspitze ausgebildet werden kann.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 101: Rohling,
- 102: Innenbohrung,
- 103: Innenbohrung,
- 104: Längsachse,
- 105: Trennlinie,
- 106: Trennlinie,
- 107: Trennlinie,
- 108: zweiter Abschnitt,
- 109: erster Abschnitt,
- 201: Rohling,
- 202: Innenbohrung,
- 203: Innenbohrung,
- 301: Rohling,
- 302: Innenbohrung,
- 303: Innenbohrung,
- 304: Längsachse,
- 305: Trennlinie,
- 306: Trennlinie,
- 307: Trennlinie,
- 308: zweiter Abschnitt,
- 309: erster Abschnitt,
- 401: Rohling,
- 402: Innenbohrung,
- 403: Innenbohrung,
- 404: Längsachse,
- 405: Trennlinie,
- 406: Trennlinie,
- 407: Trennlinie,
- 408: Strangpressvorrichtung,
- 409: Einlass,
- 410: Auslass,
- 501: Rohling,
- 502: Innenbohrung,
- 503: Innenbohrung,
- 504: Längsachse,
- 505: Trennlinie,
- 506: Trennlinie,
- 507: Trennlinie,
- 508: Strangpressvorrichtung,
- 509: Einlass,
- 510: Auslass,
- 511: Signalpfad,
- 512: Steuerpfad,
- 513: Steuerungselement
- 601: Werkzeug,
- 602: Kühlkanal,
- 603: Kühlkanal,
- 604: Längsachse,
- 605: Trennlinie,
- 606: Trennlinie,
- 607: Trennlinie,
- 608: zweiter Abschnitt,
- 609: erster Abschnitt,
- 610: Spannut,
- 611: Schneide,
- 701: Werkzeug,
- 702: Kühlkanal,
- 703: Kühlkanal,
- 704: Längsachse,
- 705: Trennlinie,
- 706: Trennlinie,
- 707: Trennlinie,
- 708: zweiter Abschnitt,
- 709: erster Abschnitt,
- 710: Spannut,
- 711: Schneide,
- 801: Einspannschaft,
- 802: Mittellinie,
- 803: Spannut
- 804: Werkzeugspitze,
- 901: Austrittsöffnung Kühlmittelkanal,
- 902: Austrittsöffnung Kühlmittelkanal,
- 1001: Mittellinie,
- 1002: Einspannschaft,
- 1003: Werkzeugspitze.

## Patentansprüche

1. Werkzeug zur spanenden Bearbeitung eines Werkstücks, wobei das Werkzeug eine Spannut (803) und einen Einspannschaft (801) aufweist, wobei das Werkzeug einen ersten Bereich mit einem ersten Spiralwinkel der Spannut aufweist und einen zweiten Bereich mit einem zweiten Spiralwinkel der Spannut aufweist, wobei der erste Spiralwinkel unterschiedlich zum zweiten Spiralwinkel ausgebildet ist und wobei zwischen dem ersten Bereich und dem zweiten Bereich ein dritter Bereich angeordnet ist, wobei im dritten Bereich der Spiralwinkel der Spannut (803) im Grenzbereich zum ersten Bereich gleich zum ersten Spiralwinkel ist und im Grenzbereich zum zweiten Bereich gleich zum zweiten Spiralwinkel ist, wobei der erste Bereich sich über einen halben, einen ganzen, einen eineinhalbfachen oder einen zweifachen Durchmesser des Werkzeugs erstreckt, wobei der dritte Bereich sich über einen halben, einen ganzen, einen eineinhalbfachen, einen zweifachen, einen zweieinhalbfachen, einen dreifachen, einen dreieinhalbfachen, einen vierfachen oder einen viereinhalbfachen Durchmesser des Werkzeugs erstreckt und wobei der zweite Bereich das restliche Werkzeug einnimmt, wobei das Werkzeug einen Kühlmittelkanal aufweist, wobei der Kühlmittelkanal über die gesamte Länge des Werkzeugs einen konstanten Drallwinkel aufweist oder wobei der Kühlmittelkanal über die gesamte Länge außer im Bereich des Einspannschaftes (801) einen konstanten Drallwinkel aufweist.

2. Werkzeug nach Anspruch 1, **dadurch gekennzeichnet, dass** der erste Spiralwinkel eine Gradzahl zwischen 5° und 50°, insbesondere 30°, aufweist und/oder wobei der zweite Spiralwinkel eine Gradzahl zwischen 5° und 50°, insbesondere 15°, aufweist.

## Claims

1. Tool for the machining of a work piece, wherein the tool has a chip flute (803) and a clamping shank (801), wherein the tool has a first region with a first spiral angle of the chip flute and a second region with a second spiral angle of the chip flute, wherein the first spiral angle is formed differently to the second spiral angle and wherein a third region is located between the first region and the second region, wherein in the third region the spiral angle of the chip flute (803) at the border region to the first region is the same as the first spiral angle in first region and in the border region to the second region is the same as the second spiral angle,
wherein the first region extends over a half-diameter, a full diameter, one-and-a-half diameters or two diameters of the tool, wherein the third region extends over a half-diameter, a full diameter, one-and-a-half diameters, two diameters, two-and a-half diameters, three diameters, three-and-a-half diameters, four diameters or four-and-a-half diameters of the tool and wherein the second region takes up the remainder of the tool,
wherein the tool has a coolant channel, wherein the coolant channel has a constant angle of twist over the entire length of the tool or wherein the coolant channel has a constant angle of twist over the entire length except in the region of the clamping shank (801).

2. Tool according to claim 1, **characterised in that** the first spiral angle has a value between 5° and 50°, especially 30°, and/or wherein the second spiral angle has a value between 5° and 50°, especially 15°.

## Revendications

1. Outil pour l'usinage d'une pièce avec enlèvement de copeaux, ledit outil comportant une goujure (803) et une queue de serrage (801), ledit outil présentant une première section avec un premier angle d'hélice de la goujure et une deuxième section avec un deuxième angle d'hélice de la goujure, le premier angle d'hélice étant prévu différent du deuxième angle d'hélice et une troisième section étant présentée entre la première section et la deuxième section, l'angle d'hélice de la goujure (803) étant dans la troisième section égal au premier angle d'hélice dans la zone limite avec la première section et égal au deuxième angle d'hélice dans la zone limite avec la deuxième section,
la première section s'étendant sur un demi-diamètre, un diamètre entier, un diamètre et demi ou un double diamètre de l'outil, la troisième section s'étendant sur un demi-diamètre, un diamètre entier, un diamètre et demi, un double diamètre, un double diamètre et demi, un tripe diamètre, un triple diamètre et demi, un quadruple diamètre ou un quadruple diamètre et demi de l'outil, et la deuxième section s'étendant sur le reste de l'outil, ledit outil comportant un canal à liquide de refroidissement, ledit canal à liquide de refroidissement présentant un angle d'hélice constant sur toute la longueur de l'outil, ou ledit canal à liquide de refroidissement présentant un angle d'hélice constant sur toute la longueur sauf dans la zone de la queue de serrage (801).

2. Outil selon la revendication 1, **caractérisé en ce que** le premier angle d'hélice a un nombre de degrés compris entre 5° et 50°, en particulier égal à 30°, et/ou **en ce que** le deuxième angle d'hélice a un nombre de degrés compris entre 5° et 50°, en particulier égal à 15°.
